Europäisches Patentamt

European Patent Office

Office européen des brevets

(19)

(11) Numéro de publication: **0 354 081**

**A1**

(12) **DEMANDE DE BREVET EUROPEEN**

(21) Numéro de dépôt: **89401951.2**

(22) Date de dépôt: **06.07.89**

(51) Int. Cl.5: **B 62 M 25/04**

(30) Priorité: **29.07.88 FR 8810320**

(43) Date de publication de la demande:
**07.02.90 Bulletin 90/06**

(84) Etats contractants désignés:
**BE DE GB IT LU NL**

(71) Demandeur: **SACHS INDUSTRIES S.A. (HURET ET MAILLARD REUNIS)**
**60 Avenue Félix-Faure**
**F-92000 Nanterre (FR)**

(72) Inventeur: **Look, Günter**
**Schwemmweg 36**
**D-8722 Bergrheinfeld (DE)**

**Sinoquet, Régis**
**29 Rue de Feuqières Saucourt**
**F-80390 Fressenneville (FR)**

(74) Mandataire: **Polus, Camille et al**
**c/o Cabinet Lavoix 2, Place d'Estienne d'Orves**
**F-75441 Paris Cedex 09 (FR)**

(54) Dispositif de commande pour dérailleur de cycle.

(57) Ce dispositif, du type comportant une partie fixe comprenant un organe de support (1) adapté pour être fixé sur une partie du cadre ou du guidon du cycle et une partie mobile (2) comportant un levier de manette de commande (3) mobile en rotation par rapport à l'organe de support, un mécanisme de commande (9) dont une première partie (11) coopère avec la partie fixe du dispositif et dont une seconde partie (10) coopère avec la partie mobile de celui-ci et un câble d'actionnement du dérailleur, est caractérisé en ce que le câble d'actionnement du dérailleur est relié à un plot d'actionnement (4), entraîné en rotation par le levier de manette de commande (3) et sur lequel sont prévus le mécanisme de commande (9) et des moyens d'accrochage (16) de la partie mobile du dispositif sur la partie fixe de celui-ci.

FIG.1

EP 0 354 081 A1

# Description

## Dispositif de commande pour dérailleur de cycle

La présente invention concerne un dispositif de commande pour dérailleur de cycle.

On connaît déjà dans l'état de la technique, un certain nombre de dispositifs de commande de ce type, qui comportent une partie fixe comprenant un organe de support adapté pour être fixé sur une partie du cadre ou du guidon du cycle et une partie mobile comportant un levier de manette de commande mobile en rotation par rapport à l'organe de support, un mécanisme de commande dont une première partie coopère avec la partie fixe du dispositif et dont une seconde partie coopère avec la partie mobile de celui-ci, et un câble d'actionnement du dérailleur.

De tels dispositifs sont connus par exemple des documents EP-A-0 157 983 au nom de SHIMANO et FR-A-2 574 364 au nom de la Demanderesse.

Par ailleurs, il existe également deux grands types de mécanismes de commande, les uns comportant des moyens de friction disposés entre le levier et l'organe de support et les autres étant munis de moyens d'indexation entre ces éléments.

Ces moyens d'indexation comportent des crans aux moyens équivalents qui permettent de déterminer avec précision, différentes positions du levier de manette, correspondant à l'établissement de différents rapports de transmission.

On conçoit que la structure de tels dispositifs est extrêmement complexe, du fait du très grand nombre de pièces entrant dans la constitution de ceux-ci et que le montage de ces dispositifs est très long et fastidieux toujours en raison de ce grand nombre de pièces qu'il faut monter les unes après les autres dans l'organe de support.

Le but de l'invention est donc de résoudre ces problèmes en proposant un dispositif qui, tout en assurant les mêmes fonctions que les dispositifs de l'état de la technique, présente une structure plus simple et dont le montage soit grandement facilité.

A cet effet, l'invention a pour objet un dispositif de commande pour dérailleur de cycle du type tel que décrit précédemment, caractérisé en ce que le câble d'actionnement du dérailleur est relié à un plot d'actionnement entraîné en rotation par le levier de manette de commande, et sur lequel sont prévus le mécanisme de commande et des moyens d'accrochage de la partie mobile du dispositif sur la partie fixe de celui-ci.

Avantageusement, les moyens d'accrochage comprennent une bague disposée autour d'une portion du plot entre le mécanisme de commande et le reste du plot et comportant des moyens de retenue adaptés pour coopérer avec des moyens complémentaires de l'organe de support pour bloquer la bague en position sur celui-ci, et donc maintenir la partie mobile du dispositif sur la partie fixe de celui-ci.

Selon une autre caractéristique, les moyens de retenue de la bague et les moyens complémentaires de l'organe de support sont adaptés pour assurer le blocage de la bague dans différentes positions angulaires par rapport à l'organe de support pour permettre un réglage de la position angulaire du levier de manette de commande par rapport à l'organe de support.

L'invention sera mieux comprise à l'aide de la description qui va suivre, donnée uniquement à titre d'exemple et faite en se référant aux dessins annexés, sur lesquels :

- la Fig. 1- représente une vue en coupe d'un dispositif de commande selon l'invention, comportant un mécanisme de commande à friction;
- la Fig.2 représente une vue en perspective éclatée d'un dispositif analogue à celui représenté sur la Fig. 1;
- la Fig.3 représente une vue en coupe d'un dispositif de commande selon l'invention, comportant un mécanisme de commande à indexation;
- la Fig.4 représente une vue en perspective éclatée d'un dispositif analogue à celui représenté sur la Fig.3;
- la Fig.5 représente une vue en perspective d'une partie mobile entrant dans la constitution d'un dispositif de commande selon l'invention;
- les Fig.6,7,8 et 9 représentent différents modes de réalisation d'une partie fixe entrant dans la constitution d'un dispositif selon l'invention;
- la Fig. 10 représente une vue en perspective d'un autre mode de réalisation d'une partie mobile entrant dans la constitution d'un dispositif selon l'invention; et
- les Fig. 11,12,13 et 14 représentent différents modes de réalisation d'une partie fixe entrant dans la constitution d'un dispositif selon l'invention.

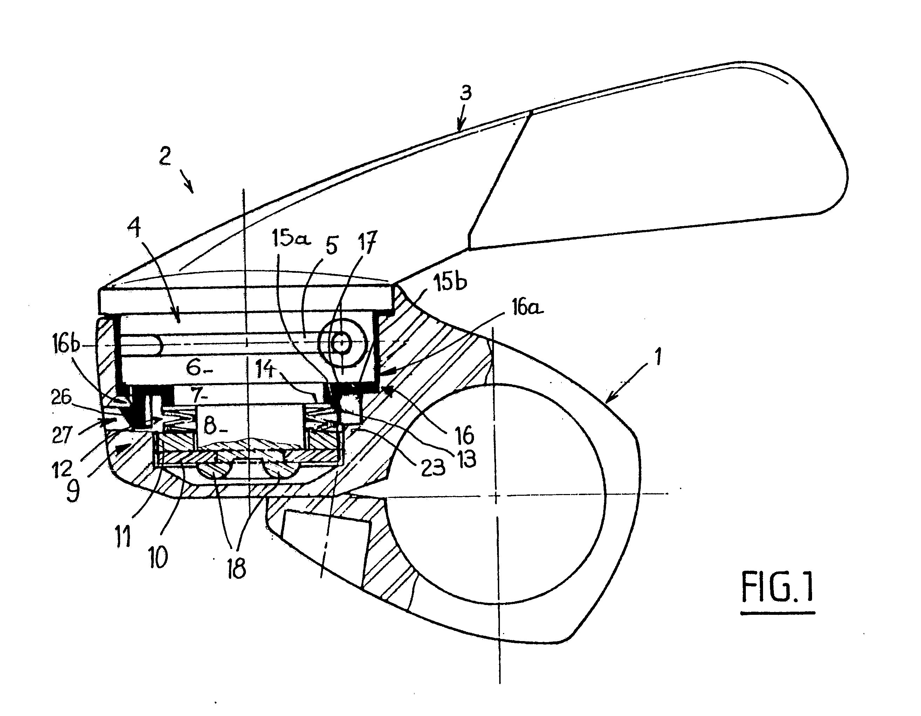

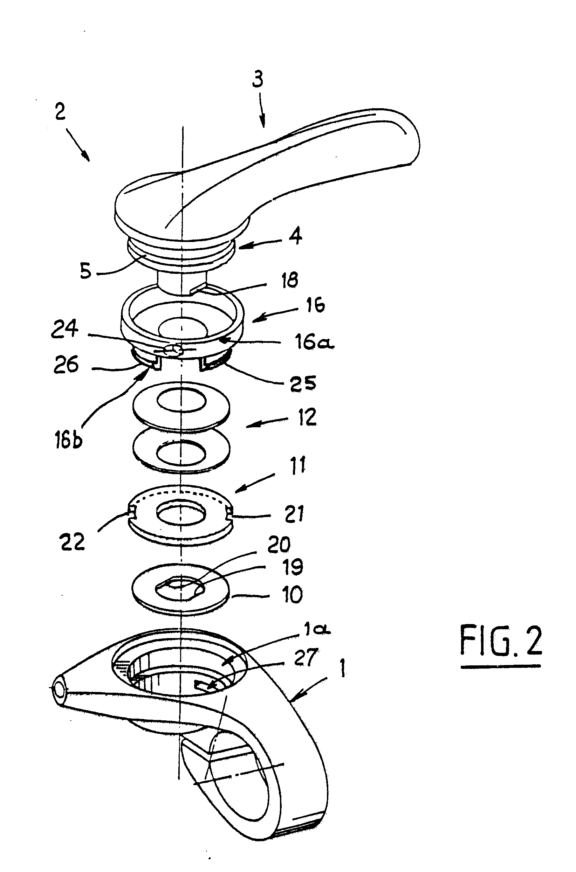

Ainsi qu'on peut le voir sur les Fig.1 et 2, un dispositif de commande pour dérailleur de cycle, selon l'invention, comporte de manière connue en soi, une partie fixe comportant un organe de support 1 adapté pour être fixé, de manière connue en soi, sur une partie du cadre ou du guidon du cycle et une partie mobile 2 adaptée pour s'engager par exemple dans un trou étagé et borgne 1a (Fig.2) de l'organe de support.

Cette partie mobile comporte de manière con nue en soi un levier de manette de commande 3 mobile en rotation par rapport à l'organe de support et adapté pour être actionné par l'utilisateur pour commander le dérailleur.

Selon l'invention, ce levier de manette de commande 3 est relié à un plot d'actionnement 4 par exemple venu de matière avec ce levier et s'étendant dans le trou borgne de l'organe de support. Le plot d'actionnement comporte une gorge 5 de réception et d'accrochage du câble d'actionnement du dérailleur (non représenté), ménagée dans une première portion 6 de celui-ci. Ce plot se présente par exemple sous la forme d'une pièce cylindrique étagée présentant respectivement la première portion 6 décrite précédemment, une seconde portion 7 et une troisième portion 8, de sections successivement décroissantes et dont les fonctions seront décrites plus en détail par la suite.

Dans le mode de réalisation représenté sur ces figures 1 et 2, le dispositif de commande selon l'invention comporte également un mécanisme de commande 9 par exemple à friction. Ce mécanisme de commande à friction comporte une première rondelle 10 fixée à l'extrémité de la portion 8 du plot d'actionnement en étant solidaire en rotation de celui-ci. Une surface plane de cette rondelle coopère avec une surface correspondante d'une seconde rondelle 11 disposée au-dessus de la première, autour de la portion 8 du plot d'actionnement. Cette seconde rondelle 11 est sollicitée en appui contre la première rondelle 10 par l'intermédiaire de moyens élastiques 12. Ces moyens élastiques 12 sont en appui contre une troisième rondelle 13 elle-même en appui contre une surface de portée 14 de la seconde portion 7 du plot 4 et une première surface de portée 15a d'une bague 16 d'accrochage de la partie mobile du dispositif sur la partie fixe de celui-ci. La bague 16 comporte une seconde surface de portée 15b en appui contre une surface de butée 17 de la première portion 6 du plot d'actionnement 4.

Le mécanisme de commande 9 et la bague 16 sont donc maintenus sur le plot d'actionnement 4 entre la première rondelle 10 du mécanisme de commande qui est fixée à l'extrémité du plot et la surface de butée 17 du plot.

La première rondelle 10 du mécanisme de commande du dispositif selon l'invention est fixée à l'extrémité du plot d'actionnement 4 par l'intermédiaire par exemple de parties en saillie recourbées 18 de celui-ci et est bloquée en rotation par rapport à celui-ci, par l'intermédiaire par exemple de méplats 19 et 20 (Fig.2) prévus sur celle-ci et adaptés pour coopérer avec des portions de forme complémentaire de l'extrémité du plot. La rondelle 10 est donc entraînée en rotation par le levier de manette de commande 3 et le plot d'actionnement 4 sous la commande de l'utilisateur.

La seconde rondelle 11 du mécanisme de commande est quant à elle montée libre en rotation autour du plot d'actionnement 4 et comporte à sa périphérie des décrochements par exemple 21 et 22 (Fig.2) adaptés pour coopérer avec des parties en saillie complémentaires par exemple 23 (Fig.1) de la partie fixe du dispositif pour bloquer cette rondelle en rotation par rapport à l'organe de support et permettre ainsi un déplacement à friction entre ces deux rondelles 10 et 11, lorsque l'utilisateur actionne le levier de commande 3.

Dans l'exemple représenté sur la Fig. 1, les moyens élastiques 12 peuvent être constitués par exemple par un ressort hélicoïdal ou comme cela est représenté sur la Fig.2, par deux rondelles élastiques disposées l'une au-dessus de l'autre.

La bague 16 comporte quant à elle une première portion 16a disposée autour de la première portion 6 du plot d'actionnement et comportant un évidement 24 (Fig.2) pour le passage du câble d'actionnement du dérailleur. Cette bague comporte également une seconde portion 16b munie de parties en saillie par exemple 25, 26, se présentant sous la forme de crochets déformables élastiquement, formant moyens de retenue, adaptées pour coopérer avec des surfaces de butée de la partie fixe du dispositif pour maintenir la partie mobile du dispositif sur la partie fixe de celui-ci. Ces surfaces de butée se présentent par exemple sous la forme d'évidements 27 débouchant vers l'extérieur de l'organe de support, dans lesquels s'engagent les parties en saillie de la bague, pour maintenir la partie mobile du dispositif constituée par le levier de manette de commande 3, le plot d'actionnement 4 et le mécanisme de commande 9, en position par exemple dans le trou borgne de l'organe de support.

Comme cela sera décrit plus en détail par la suite, les moyens d'accrochage de la partie mobile du dispositif sur la partie fixe, peuvent être constitués par des moyens présentant des formes autres que les crochets élastiques décrits sur ces figures. Il est également à noter que la partie fixe du dispositif et plus particulièrement l'organe de support peuvent comporter une ou plusieurs séries de surfaces de butée comme les évidements 27, décalées angulairement pour permettre le blocage de la bague 16 dans différentes positions angulaires par rapport à l'organe de support, ceci afin de permettre un réglage de la position angulaire du levier de manette de commande par rapport à l'organe de support.

Dans l'exemple illustré sur ces figures 1 et 2, la bague d'accrochage 16 comprend trois parties en saillie sous forme de crochets 25,26, décalées de 120° et adaptées pour coopérer avec trois évidements complémentaires 27 de l'organe de support. Il va de soi qu'un nombre différent de parties en saillie peut être utilisé.

Ces crochets par exemple 26 (Fig.1), peuvent être reliés élastiquement au reste de la bague 16, de manière à permettre leur engagement dans les évidements de l'organe de support par enfoncement de la partie mobile dans le trou borgne 1a de cet organe et leur dégagement de ces évidements constituant les surfaces de butée de l'organe de support, par exemple par un outil approprié, engagé dans les évidements 27 de l'organe de support, afin de permettre le retrait des crochets des évidements de l'organe de support et donc la séparation de la partie mobile du dispositif de la partie fixe de celui-ci.

La friction, ainsi qu'on l'a mentionné précédemment, est donc assurée par l'intermédiaire des rondelles 10 et 1 1 et plus particulièrement des surfaces planes de celles-ci en appui l'une contre l'autre, l'une des rondelles étant entraînée en rotation par le levier et le plot et l'autre étant fixe en rotation par rapport à l'organe de support.

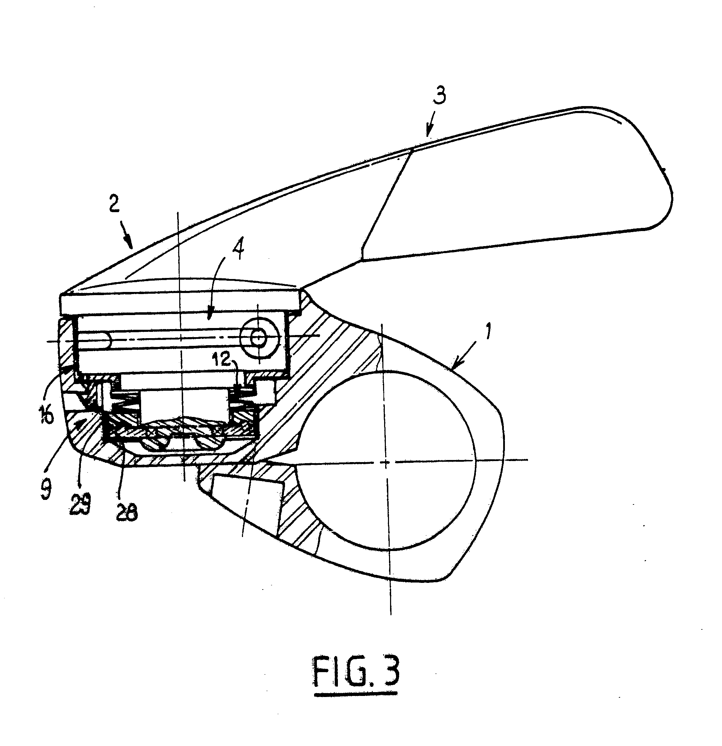

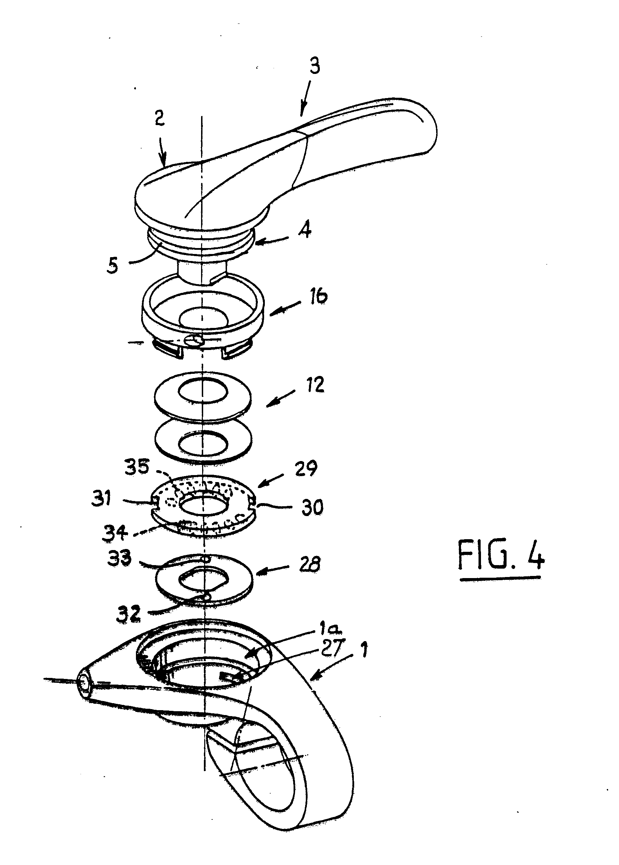

Il va de soi qu'un mécanisme de commande à indexation peut également être prévu à la place du mécanisme à friction, comme cela est représenté sur les Fig.3 et 4.

Ces figures représentent un dispositif de commande muni de moyens d'indexation, la structure générale du dispositif de commande étant analogue à celle décrite en regard des figures 1 et 2 et n'étant donc pas reprise dans le détail.

En effet, le dispositif représenté sur ces figures 3 et 4, comporte toujours un levier 3 de manette de commande, le plot 4 d'actionnement du câble de dérailleur, sur lequel sont prévus le mécanisme de commande 9 et la bague d'accrochage 16, ainsi que les différents éléments décrits précédemment.

Le mécanisme de commande comprend une première rondelle 28 fixée à l'extrémité du plot 4 d'actionnement et donc entraînée en rotation par celui-ci, comme la rondelle 10 du premier mode de réalisation représenté sur les Fig.1 et 2. Cette première rondelle 28 est mobile en rotation par rapport à une seconde rondelle 29 disposée autour du plot 4. Cette rondelle 29 est sollicitée par l'intermédiaire des moyens élastiques 12 décrits précédemment en direction de la première rondelle et est bloquée en rotation par rapport à l'organe de support 1 par l'intermédiaire de décrochements 30 et 31 (Fig.4) analogues aux décrochements 21 et 22 décrits en regard de la Fig.2, coopérant avec les parties en saillie correspondantes de l'organe de support.

La partie du dispositif qui vient d'être décrite est donc identique à celle décrite en regard des Fig.1 et 2.

Cependant, les surfaces en regard des rondelles 28 et 29 comportent des parties en saillie et des décrochements ou crans complémentaires assurant l'indexation entre la partie mobile et la partie fixe du dispositif.

Ainsi par exemple, comme cela apparaît plus clairement sur la Fig.4, la rondelle 28 comporte deux bossages 32 et 33 diamétralement opposés et adaptés pour coopérer avec deux séries de décrochements ou crans 34, 35 décalés angulairement pour assurer l'indexation entre les deux parties du dispositif.

Bien entendu, les parties en saillie 32 et 33 de la rondelle 28 peuvent être remplacées par des évidements de réception de billes adaptées pour coopérer avec les séries de décrochements ou crans 34 et 35 ou d'autres moyens équivalents' pour assurer la même fonction d'indexation que les bossages.

Les autres parties du dispositif étant identiques, on ne les décrira pas plus en détail.

On conçoit donc que le dispositif comporte d'une part une partie fixe comprenant l'organe de support qui est adapté pour être fixé sur une partie du cadre ou du guidon du cycle et d'autre part une partie mobile sur laquelle sont disposés toutes les pièces du mécanisme de commande et les moyens d'accrochage de cette partie mobile sur la partie fixe de celui-ci.

En effet, cette partie mobile comporte le levier de manette de commande 3 entraînant en rotation le plot d'actionnement 4 auquel est relié le câble d'actionnement du dérailleur, ce plot d'actionnement portant le mécanisme de commande et une bague d'accrochage de ce sous-ensemble sur l'organe de support.

Le montage du dispositif de commande selon l'invention se fait donc en réalisant d'une part une partie mobile du dispositif, en disposant autour du plot d'actionnement, la bague d'accrochage 16, éventuellement la troisième rondelle 13, les moyens élastiques 12, la seconde rondelle 11 et enfin la première rondelle 10 qui est finalement fixée à l'extrémité du plot d'actionnement 4. Ce sous-ensemble se présente alors d'une seule pièce et peut être fixé très facilement à l'intérieur du trou borgne de l'organe de support 1 par les crochets de la bague.

Il va de soi que d'autres modes de réalisation des moyens d'accrochage peuvent être envisagés, de même que l'organe de support peut présenter une forme différente de celle représentée.

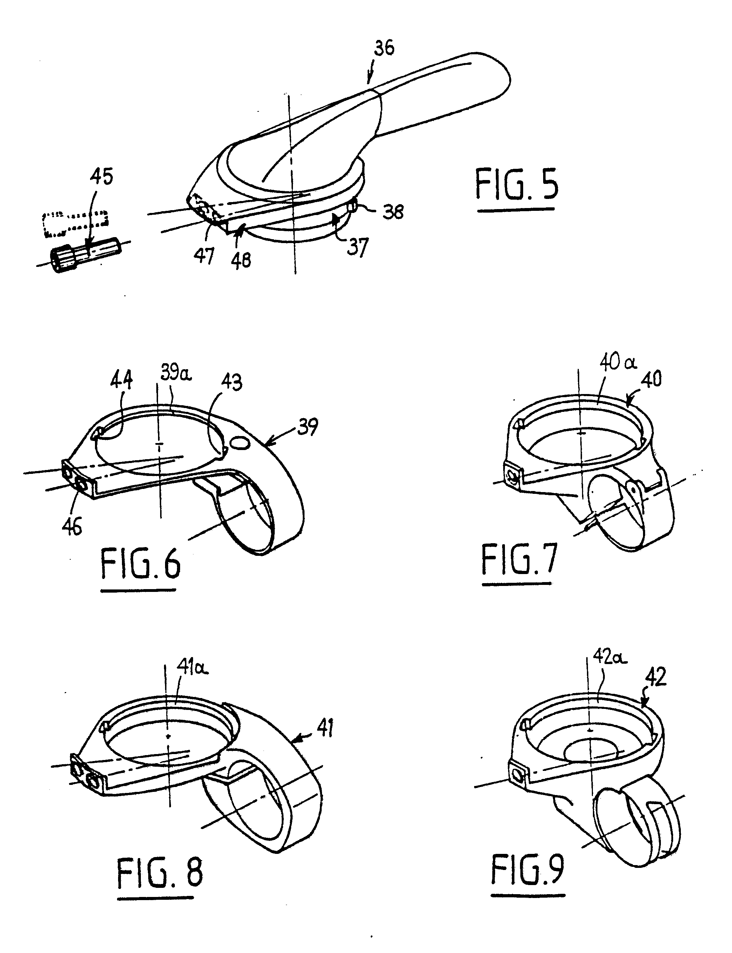

En effet, et comme on peut le voir sur les figures 5,6, 7, 8 et 9, la partie mobile du dispositif peut également se présenter sous la forme d'un sous-ensemble 36 (Fig.5) comportant une bague d'accrochage 37 sur l'organe de support, munie de parties en saillie latérale 38 adaptées pour coopérer avec des surfaces de butée d'un organe de support comme les organes de support 39, 40, 41 et 42 représentés respectivement sur les Fig.6 à 9. Ces surfaces de butée sont par exemple constituées par un épaulement 39a, 40a, 41a, 42a, de maintien, adapté pour coopérer avec les parties en saillie de la bague afin de retenir ladite partie mobile du dispositif sur la partie fixe de celui-ci.

Il va de soi que les parties en saillie peuvent par exemple se présenter sous la forme de crochets adaptés pour franchir l'épaulement de l'organe de support en se déformant élastiquement pour venir reprendre une position d'accrochage derrière l'épaulement.

L'épaulement de l'organe de support peut également comporter deux passages, par exemple 43 et 44 pour l'épaulement 39a de l'organe de support 39 représenté sur la Fig.6, ces passages permettant le montage des parties en saillie par exemple 38 de la partie mobile du dispositif, derrière l'épaulement 39a pour les amener en position d'accrochage. Le blocage en position de la bague et donc de la partie mobile du dispositif dans l'organe de support, est alors assuré par exemple par l'intermédiaire d'une butée 45 (Fig.5) d'arrêt de gaine du câble d'actionnement du dérailleur. Cette butée est adaptée pour coopérer avec au moins un évidement de l'organe de support, par exemple 46 pour l'organe de support 39 représenté sur la Fig.6 et au moins un évidement par exemple 47 (Fig.5) ménagé dans une partie en saillie 48 de la bague, pour bloquer celle-ci en rotation par rapport à l'organe de support.

Il va de soi que l'organe de support et la bague peuvent comporter plusieurs évidements 46 et 47, décalés angulairement pour permettre un réglage de la position angulaire de la bague par rapport à l'organe de support et donc du levier de manette de commande par rapport à celui-ci.

Ainsi par exemple sur la Fig.5, la bague 37 comporte deux évidements décalés angulairement, tandis que sur les Fig.6 et 8, les organes de support 39 et 41 comportent deux évidements décalés angulairement et que sur les Fig.7 et 9, les organes de support 40 et 42 ne comportent qu'un seul évidement, ces évidements étant ménagés par exemple dans des portions recourbées de ceux-ci.

Il va de soi que les moyens de blocage en rotation de la bague par rapport à l'organe de support peuvent être constitués par d'autres moyens que la butée d'arrêt de gaine du câble d'actionnement du dérailleur.

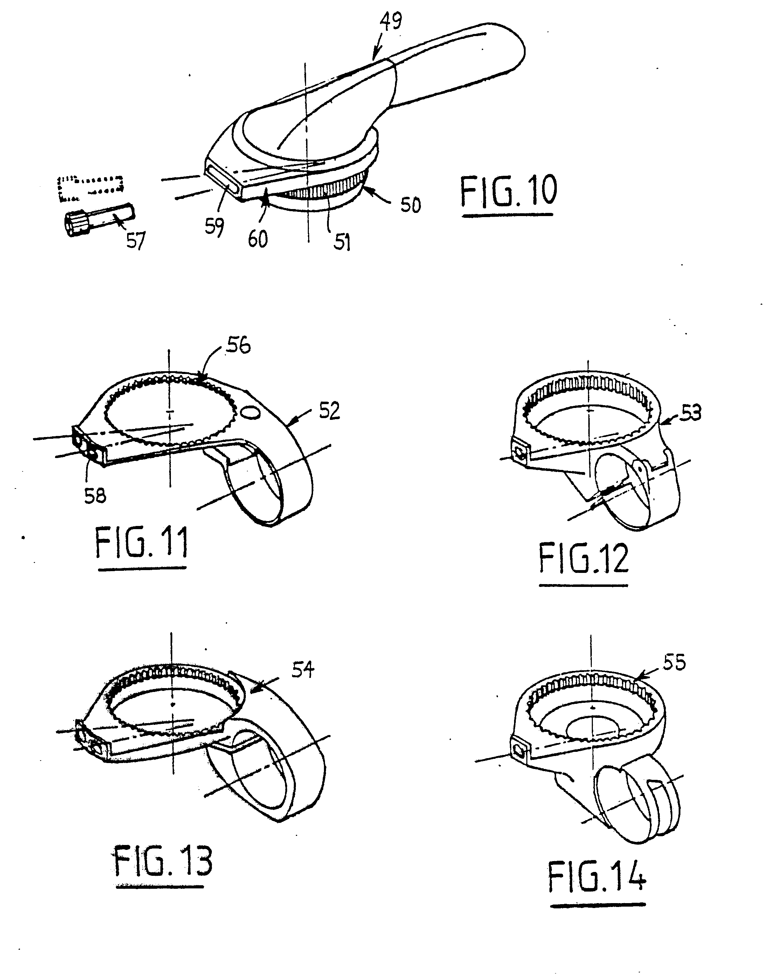

Comme on peut le voir sur la Fig.10, qui représente un autre mode de réalisation d'une partie mobile 49 d'un dispositif selon l'invention, celle-ci peut comporter une bague 50 présentant une couronne dentée 51 adaptée pour coopérer avec une couronne dentée complémentaire d'un organe de support, par exemple 52, 53, 54 ou 55, représenté sur les Fig.11 à 14. Ces organes de support comportent une couronne dentée complémentaire, par exemple 56 pour l'organe de support 52 représenté sur la Fig.11 adaptée pour coopérer avec la couronne dentée 51 de la bague 50 de la partie mobile 49 pour assurer son blocage en rotation dans différentes positions angulaires par rapport à l'organe de support.

Comme déjà décrit en regard des Fig.5 à 9, le blocage en position de la partie mobile du dispositif sur la partie fixe de celui-ci peut être assuré par exemple par l'intermédiaire d'une butée d'arrêt de gaine 57 du câble d'actionnement du dérailleur, cette butée étant adaptée pour coopérer avec au moins un évidement de l'organe de support comme l'évidement 58 pour l'organe de support 52 représenté sur la Fig.11 et au moins un évidement 59 ménagé dans une partie en saillie 60 de la bague 50 de la partie mobile, pour bloquer celle-ci en position sur l'organe de support.

Il va de soi que l'organe de support par exemple 52 et la bague 50 peuvent comporter plusieurs évidements 58 et 59 respectivement, décalés angulairement pour permettre le blocage dans différentes positions angulaires de cette bague par rapport à la partie fixe du dispositif afin de permettre un réglage de la position angulaire de la partie mobile du dispositif par rapport à la partie fixe de celui-ci.

Il va de soi également que l'évidement 59 peut être constitué par un trou oblong permettant ce réglage.

Par ailleurs, le levier et le plot d'actionnement peuvent également être reliés par des moyens d'entrainement débrayables par coopération de formes pour permettre un réglage de la position du levier par rapport au plot afin d'adapter plus précisément la position intiale du levier par exemple à la forme du guidon du cycle. Dans ce cas, la fixation du levier sur le plot est assurée par exemple par l'intermédiaire d'une vis de serrage. Les moyens débrayables d'entraînement peuvent par exemple être constitués par des couronnes dentées complémentaires coopérant ensemble pour entraîner le plot sous la commande du levier.

On conçoit que de part sa structure en deux parties, le dispositif selon l'invention présente une grande facilité de montage et de réglage. Il est par ailleurs très facile de monter soit un dispositif à mécanisme de commande à friction, soit un dispositif à mécanisme de commande à indexation dans des supports identiques, ce qui facilite la standardisation de leur fabrication.

## Revendications

1. Dispositif de commande pour dérailleur de cycle du type comportant une partie fixe (1;39,40,41, 42; 52,53,54,55) comprenant un organe de support adapté pour être fixé sur une partie du cadre ou du guidon du cycle et une partie mobile (2;36;49) comportant un levier de manette de commande (3) mobile en rotation par rapport à l'organe de support, un mécanisme de commande (9) dont une première partie (11 ;29) coopère avec la partie fixe du dispositif et dont une seconde partie (10;28) coopère avec la partie mobile de celui-ci et un câble d'actionnement du dérailleur, caractérisé en ce que le câble d'actionnement du dérailleur est relié à un plot d' actionnement (4), entraîné en rotation par le levier de manette de commande (3) et sur lequel sont prévus le mécanisme de commande (9) et des moyens d'accrochage (16;37;50) de la partie mobile du dispositif sur la partie fixe de celui-ci.

2. Dispositif selon la revendication 1, caractérisé en ce que les moyens d'accrochage comprennent une bague (16;37;50) disposée autour d'une portion (6) du plot (4) entre le mécanisme de commande (9) et le reste du plot et comportant des moyens de retenue (25,26;38,47;51,59) adaptés pour coopérer avec des moyens complémentaires (27;45,46; 39a,40a,41a,42a; 56,57,58) de l'organe de support pour bloquer la bague en position sur celui-ci et donc maintenir la partie mobile du dispositif sur la partie fixe de celui-ci.

3. Dispositif selon la revendication 2, caractérisé en ce que la bague (16) comprend un évidement (24) pour le passage du câble d'actionnement du dérailleur, cet évidement étant ménagé en regard d'une gorge (5) de réception du câble prévue sur le plot (4).

4. Dispositif selon la revendication 2 ou 3, caractérisé en ce que les moyens de retenue (25,26;38,47;51,59) de la bague (16;37;50) et les moyens complémentaires (27;45,46;39a,40a,41a,42a;56,57,58) de l'organe de support sont adaptés pour permettre le blocage de la bague dans différentes positions angulaires par rapport à l'organe de support afin de permettre un réglage de la position angulaire du levier de manette de commande (3) par rapport à l'organe de support (1).

5. Dispositif selon l'une quelconque des revendications 2 à 4, caractérisé en ce que les moyens de retenue et les moyens complémentaires comprennent au moins une partie en saillie (25,26;38) adaptés pour coopérer avec des moyens de butée (27;39a,40a,41a,42a) pour maintenir la bague en position sur l'organe de support.

6. Dispositif selon la revendication 5, caractérisé en ce que ladite au moins une partie en saillie (25,26;38) est prévue sur la bague (16; 37) tandis que les moyens de butée (27;39a,40a,41a,42a) sont prévus sur l'organe de support (1; 39,40,41,42).

7. Dispositif selon la revendication 5 ou 6, caractérisé en ce que ladite au moins une partie en saillie se présente sous la forme d'un crochet (25, 26).

8. Dispositif selon la revendication 6 ou 7, caractérisé en ce que les moyens de butée comprennent au moins un évidement (27) ménagé dans l'organe de support (1) et adapté pour recevoir ladite au moins une partie en saillie (25,26) de la bague (16).

9. Dispositif selon la revendication 8, caractérisé en ce que les moyens de butée comprennent plusieurs évidements (27) décalés angulairement sur l'organe de support (1) pour permettre un réglage de la position angulaire d' accrochage de la bague sur l'organe de support.

10. Dispositif selon la revendication 9, caractérisé en ce que ledit crochet (25,26) est relié de manière élastique au reste de la bague (16) et en ce que ledit au moins un évidement (27) de réception de ce crochet débouche vers l'extérieur de l'organe de support pour permettre l'introduction d'un outil de dégagement du crochet (25, 26) de l'évidement (27), afin de permettre un démontage de la partie mobile du dispositif.

11. Dispositif selon la revendication 5, 6 ou 7, caractérisé en ce que les moyens de butée comprennent un épaulement (39a,40a,41a,42a) de maintien de ladite au moins une partie en saillie (38).

12. Dispositif selon la revendication 11, caractérisé en ce que l'épaulement comprend au moins un passage (43,44) de montage de ladite au moins une partie en saillie.

13. Dispositif selon l'une quelconque des revendications 5 à 12, caractérisé en ce que les moyens de retenue comprennent trois parties en saillie (25,26) décalées de 120°.

14. Dispositif selon l'une quelconque des revendications 2 à 4, caractérisé en ce que les moyens de retenue et les moyens complémentaires comprennent des couronnes dentées complémentaires (51 ,56) prévues sur la bague (50) et l'organe de support (52,53,54,55).

15. Dispositif selon l'une quelconque des revendications 11 à 14, caractérisé en ce que les moyens de retenue comprennent en outre des moyens de blocage (45;57) de la bague (37;50) en position sur l'organe de support (1;39,40,41,42; 52, 53,54 55).

16. Dispositif selon la revendication 15, caractérisé en ce que les moyens de blocage en position de la bague comprennent une butée d'arrêt de gaine (45;57) du câble d'actionnement du dérailleur adaptée pour coopérer avec au moins un évidement (46; 58) de l'organe de support (39;52) et des surfaces de butée (47;59) de la bague pour bloquer celle-ci en position sur l'organe de support.

17. Dispositif selon la revendication 16, caractérisé en ce que l'organe de support comporte plusieurs évidements (46;58) de réception de la butée d'arrêt de gaine (45;57) décalés angulairement pour permettre un réglage angulaire de la position de la bague et donc de la partie mobile du dispositif sur la partie fixe de celui-ci.

18. Dispositif selon la revendication 16 ou 17, caractérisé en ce que la bague comporte plusieurs surfaces de butée (47;59) décalées angulairement pour permettre un réglage angulaire de la position de la bague et donc de la partie mobile du dispositif sur la partie fixe de celui-ci.

19. Dispositif selon l'une quelconque des revendications 16 à 18, caractérisé en ce que les surfaces de butée de la bague comprennent au moins un évidement (47;59) de réception de la butée d'arrêt de gaine (45;57)

20. Dispositif selon la revendication 19, caractérisé en ce que les moyens de butée comprennent plusieurs évidements de réception de la butée d'arrêt de gaine décalés angulairement.

21. Dispositif selon l'une quelconque des revendications précédentes, caractérisé en ce que l'organe de support (1) présente un trou étagé et borgne (1a) de réception du plot d'actionnement (4), ce plot d'actionnement se présentant sous la forme d'une pièce cylindrique étagée.

22. Dispositif selon l'une quelconque des revendications précédentes, caractérisé en ce que le mécanisme de commande (9) et les moyens d'accrochage (16) sont maintenus sur le plot entre des parties en saillie latérales (18) à l'extrémité de celui-ci et une surface de butée (17) de celui-ci.

23. Dispositif selon l'une quelconque des revendications précédentes, caractérisé en ce que le mécanisme de commande comprend une première rondelle (10;28) fixée à l'extrémité du plot (4), entraînée en rotation par celui-ci et dont une surface est adaptée pour coopérer avec une surface complémentaire d'une seconde rondelle (11;29) disposée autour du plot (4), au-dessus de la première rondelle, bloquée en rotation par rapport à la partie fixe (1) du dispositif et sollicitée en appui contre la première rondelle (10) par des moyens élastiques (12), eux-mêmes en appui contre une surface de portée (15a) des moyens d accrochage (16).

24. Dispositif selon la revendication 23, dans lequel le mécanisme de commande est un mécanisme à friction, caractérisé en ce que les première et seconde rondelles (10,11) présentent des surfaces d'appui planes en contact l'une contre l'autre.

25. Dispositif selon la revendication 23, dans lequel le mécanisme de commande est un mécanisme d'indexation, caractérisé en ce que les surfaces en regard des rondelles (28,29) comprennent des moyens d'indexation (32,33,34,35) de la position relative des rondelles l'une par rapport à l'autre et donc de la partie mobile du dispositif par rapport à la partie fixe.

26. Dispositif selon la revendication 25, caractérisé en ce que les moyens d'indexation comprennent des décrochements ou crans (34,35) sur l'une des rondelles (29) adaptés pour coopérer avec des parties en saillie (32,33) sur l'autre rondelle (28).

27. Dispositif selon la revendication 26, caractérisé en ce que les parties en saillie (32,33) de l'une des rondelles (28) sont venues de matière avec cette rondelle.

28. Dispositif selon la revendication 26, caractérisé en ce que les parties en saillie de l'une des rondelles (28) sont constituées par des billes dont une partie s'engage dans des évidements de cette rondelle et adaptées pour coopérer avec les décrochements ou crans (34, 35) de l'autre rondelle.

29. Dispositif selon l'une quelconque des revendications 23 à 28, caractérisé en ce que la seconde rondelle (11;29) comporte des décrochements (21, 22; 30, 31) adaptés pour coopérer avec des parties en saillie (23) de l'organe de support, pour assurer son blocage en rotation par rapport à celui-ci.

30. Dispositif selon l'une quelconque des revendications 23 à 29, caractérisé en ce que la première rondelle (10;28) est fixée à l'extrémité du plot (4) par l'intermédiaire des parties en saillie latérales (18) de celui-ci et de méplats (19,20) complémentaires.

FIG.1

EP 0 354 081 A1

FIG.2

FIG. 3

FIG. 4

FIG. 5

FIG.6

FIG.7

FIG. 8

FIG.9

**FIG. 10**

**FIG. 11**

**FIG. 12**

**FIG. 13**

**FIG. 14**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 578 506 (SHIMANO INDUSTRIAL CO. LTD)<br>* Figures; pages 5, ligne 8 - page 6, ligne 19 *<br>--- | 1,2,5-7 ,21,22 | B 62 M 25/04 |
| A | FR-A-2 579 163 (SHIMANO INDUSTRIAL CO. LTD)<br>* Résumé; figures *<br>--- | 23-27 | |
| A | DE-A-3 200 562 (S. LUTZE)<br>* Figures; page 5, ligne 29 - page 6, ligne 30 *<br>----- | 1 | |

|  |  |  | DOMAINES TECHNIQUES RECHERCHES (Int. Cl.5) |
|---|---|---|---|
|  |  |  | B 62 K<br>B 62 M |

Le présent rapport a été établi pour toutes les revendications

| Lieu de la recherche | Date d'achèvement de la recherche | Examinateur |
|---|---|---|
| LA HAYE | 02-11-1989 | FRANKS B.G. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
 
& : membre de la même famille, document correspondant

EPO FORM 1503 03.82 (P0402)